# EUROPEAN PATENT SPECIFICATION

(11) **EP 4 463 002 B1**
(45) Date of publication and mention of the grant of the patent: **20.08.2025**
(21) Application number: 22709562.7
(22) Date of filing: 09.02.2022
(51) Int. Cl.: A01N 47/36, A01N 37/02, A01N 37/04, A01N 37/44, A01N 43/08, A01N 43/74, A01N 59/26, A01N 63/20, A01N 63/22, A01N 63/27, A01N 63/28, A01N 25/00, A01P 21/00

(54) **COMBINATION FOR IMPROVING PLANT GROWTH AND/OR YIELD, FORMULATION AND METHOD FOR INCREASING PLANT GROWTH, STRESS RESISTANCE, AND YIELDS, AND USE THEREOF**
KOMBINATION ZUR VERBESSERUNG DES PFLANZENWACHSTUMS UND/ODER ERTRAGS, FORMULIERUNG UND VERFAHREN ZUR ERHÖHUNG DES PFLANZENWACHSTUMS, DER STRESSRESISTENZ UND ERTRAGS SOWIE VERWENDUNG DAVON
COMBINAISON POUR AMÉLIORER LA CROISSANCE ET/OU LE RENDEMENT DE PLANTES, FORMULATION ET PROCÉDÉ POUR AUGMENTER LA CROISSANCE DE PLANTES, LA RÉSISTANCE AU STRESS ET LES RENDEMENTS, ET SON UTILISATION

(43) Date of publication of application: 20.11.2024
(73) Proprietor: INSTITUTE OF EXPERIMENTAL BOTANY CAS CR, V. V. I., 16500 Prague 6 - Lysolaje (CZ); Intracrop Limited, London W1K 4QY (GB)
(72) Inventor: NISLER, Jaroslav, 14000 Praha 4 (CZ); PALMER, Mark, Wrexham SY13 2LB (GB)
(74) Representative: Harber IP s.r.o.
(86) International application number: PCT/CZ2022/050015
(87) International publication number: WO 2023/151728

(56) References cited:
- WO-A1-01/54500
- WO-A1-2016/037595
- WO-A1-2020/172550
- WO-A2-2012/093374
- US-A1- 2007 105 719
- MOK ET AL: "Cytokinin activity of N-phenyl-N'-1, 2,3-thiadiazol-5-ylurea (thidiazuron)", PHYTOCHEMISTRY, ELSEVIER, AMSTERDAM , NL, vol. 21, no. 7, 1 January 1982 (1982-01-01), pages 1509 - 1511, XP022403562, ISSN: 0031-9422

## Description

### Field of Art

The present invention relates generally to compositions and methods of use of combinations of 1-(2-methoxyethyl)-3-(1,2,3-thiadiazol-5yl)urea (MTU) with selected nitrogen utilization enhancers for improving plant growth, yields, and for protecting plants against stress conditions.

### Background Art

Over the past several decades, agrochemicals have greatly enhanced agricultural productivity and yields. It is a rapid plant growth that is desirable because it is an important factor in timing, harvesting, and cost of production. As such, rapid plant growth and yield maximization under both optimal and stress conditions are economically important goals for many agricultural and greenhouse businesses.

To achieve these goals nitrogen is extensively used as plant fertilizer. However, the application of nitrogen is a substantial cost in the production of horticultural and agronomic crops, and it is a cause of environmental pollution. Thus, one area of agricultural research is focused on nitrogen use efficiency to maximize the nitrogen utilization by plants and to minimalize its leakage to the environment. So, while there is a desire for a reduction of the amount of agrochemicals applied, the need for ever-increasing production remains.

Many agricultural activities are highly time-sensitive, with costs and returns being dependent upon a rapid turnover of crops or upon being first to market. The speed of growth also impacts the resistance of plants to stress conditions. Plants with larger root systems are more resistant to drought stress, survive for a longer period of time and their yield is higher. Therefore, rapid plant growth is an economically important goal for many agricultural businesses that grow cereals as well as high-value crops such as vegetables, berries, and fruits.

Similarly, to the desire for rapid plant growth, the quality traits of the plant products (fruits, seeds, leaves) are important to the agricultural industry.

From the plethora of the literature, it is clear that nitrogen availability and nitrogen use efficiency have a major impact on plant growth, development, and quality of plant products.

Nitrogen inputs represent a substantial proportion of costs in the production of horticultural and agronomic crops worldwide. However, in agricultural systems, considerable amounts of nitrogen are lost in time between fertilizing the plants and nitrogen absorption by plants. The nitrogen absorption by plants is limited by the capacity of the plant nitrogen-metabolism cycle. This cycle in higher plants - the so-called glutamate biosynthesis pathway - involves interconversions of glutamine, glutamate, and 2-oxoglutarate to amino acids and other plant nitrogen-containing molecules such as precursors for chlorophyll, nucleic acids, etc.

Maintaining an effective concentration of either one or more components of the nitrogen-metabolism cycle (glutamine, glutamate, 2-oxoglutarate) has been shown to result in improved nitrogen utilization, growth, quality traits, and yield.

The application of several other compounds has also been shown to increase nitrogen utilization and to improve growth, quality traits, and yield.

US 6,831,040 B1 by Unkefer et al. illustrates that application of prolines, such as pyroglutamic acid (5-oxoproline = 2-pyrrolidone-5-carboxylic acid = pidolic acid = PCA) and mixtures thereof to plants can promote growth. PCA can be converted to glutamate (Mazelis M, Pratt HM. 1976. In vivo conversion of 5-oxoproline to glutamate by higher plants. Plant Physiology 57: 85-87) and thus improve the efficiency of nitrogen utilization.

US 2007/0105719 A1 by Unkefer et al. describes a composition containing a mixture of L- and D-pyroglutamate stereoisomers in a specific ratio and illustrates that application of a mixture of Land D-pyroglutamate (PCA) stereoisomers in a ratio of L to D of from about 80:20 to about 97:3 to plants can increase in agronomic performance (promote growth and/or yield, improve seed germination, protect plants against stress).

WO 2001/054500 A1 by Unkefer et al. illustrates that the application of proline can promote growth, quality traits, and yield. Proline can also be converted to glutamine in plants thus improving nitrogen utilization (Frontiers in Plant Science 6, p. 544 (2015); DOI=10.3389/fpls.2015.00544).

Poly-γ-(glutamic acid) (γ-PGA) has been shown to improve nitrogen utilization and yield in wheat (J. Soil Sci. Plant Nutr. vol.13 no.3 (2013); http://dx.doi.org/10.4067/S0718-95162013005000059; Effect of poly-(γ-glutamic acid) on wheat productivity, nitrogen use efficiency and soil microbes). Application of specific amino acids individually or mixtures of amino acids has also been shown to improve nitrogen utilization, stress tolerance, growth, and yield.

Besides amino acid-based biostimulants, phosphite was also shown to increase nitrogen utilization (https://www.uni-kiel.de/phytomed/pdf/Phosphit.pdf).

WO 2016/037595 A1 and US 2017/280721 A1 by Nisler et al. disclose substituted 1,2,3-thiadiazol-5yl-urea derivatives and their use as anti-senescence and anti-stress factors in plant cells, organs, and whole plants, wherein the stress is caused by dryness, heat, cold, or salinity.

They are also used for increasing the yield of plants without the negative side effect on root growth. Formulations comprising a substituted 1,2,3-thiadiazol-5yl-urea derivative and auxiliary substances, such as preservatives, stabilizers, fertilizers, wetting agents, emulsifiers etc. are mentioned as well. Among others, the cited documents illustrate that application of 1-(2-methoxyethyl)-3-(1,2,3-thiadiazol-5yl)urea (MTU) can protect plants against abiotic stresses and improve the yield of crops.

WO 2018/224966 discloses a combination of pyroglutamic acid (PCA) and strobilurin fungicide for improving plant growth, health, yields, and for protecting plants against stress and for disease control.

WO 2020/172550 describes a combination of PCA and urease inhibitor NBPT to improve plant health and to increase nitrogen assimilation in plants.

Mok et al. ("Cytokinin activity of N-phenyl-N'-1,2.3-thiadiazol-5-ylurea (thidiazuron)", Phytochem., vol. 21, no. 7, 1 Jan. 1982, p.1509-1511) discloses N-phenyl-N'-1,2.3-thiadiazol-5-ylurea as a plant growth regulator with high activity in promoting the growth of cultures of *Phaseolus lunatus.*

WO 2012/093374 A2 discloses a fertiliser to improve plant mass yield (therefore also plant growth), containing immobilized live microorganisms on solid carriers, and method of its preparation.

Changes in agronomic practice have improved nitrogen utilization over the last several decades, but current and future demand for food and a healthy environment require further innovation in crop management. The constant need to maximize the nitrogen utilization by plants and to minimalize the nitrogen leakage to the environment, as well as an improvement in plant growth, stress resistance, and yield with the reduced need for agrochemicals nevertheless remains.

### Disclosure of the Invention

It has surprisingly been found that a combination of one specific 1,2,3-thiadiazol-5yl-urea derivative, 1-(2-methoxyethyl)-3-(1,2,3-thiadiazol-5yl)urea (MTU, Scheme 1), with at least one of the selected nitrogen utilization enhancers defined in the claims leads to a significant increase in plant growth. The observed effect is synergistic as the increase in plant growth due to the combination is more than just the addition of the effect of MTU alone or of the nitrogen utilization enhancer alone on the plant growth. Therefore, one aspect of the invention described herein is directed to a combination comprising MTU and at least one nitrogen utilization enhancer.

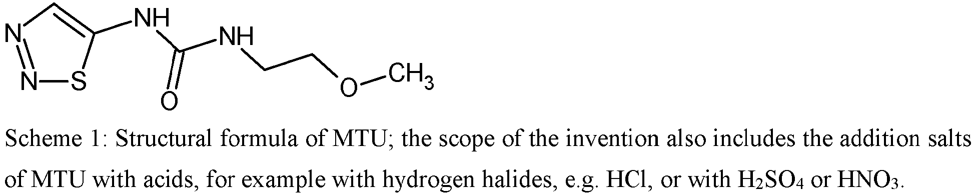

The nitrogen utilization enhancer can be defined as a compound or a microorganism, which enhances the uptake of the nitrogen by plants, and in this invention, it is selected from the group consisting of: phosphite (including [HPO₃]²⁻ and/or [H₂PO₃]⁻ anions), glutamine, glycine, glycine betaine (trimethylglycine), 2-oxoglutarate, glutamic acid and glutamate, aspartic acid and aspartate, proline, 5-oxoproline (pyroglutamic acid, PCA), γ-aminobutyric acid (GABA), poly-homo-amino acids such as poly-γ-(glutamic acid) (γ-PGA), poly(aspartic acid) (PAA) and poly(glutamic acid); diethyl aminoethyl hexanoate (DA6), N-acetyl thiazolidine 4-carboxylic acid (NATCA), thiazolidine 4-carboxylic acid. The poly-homo-amino acids have preferably from 2 to 600 monomer units, more preferably from 10 to 150 monomer units. The nitrogen utilization enhancers are to be understood as including free acids as well as agronomically acceptable salts thereof with agronomically acceptable cations. The agronomically acceptable cations are for example selected from the group comprising: amines (for example ammonia, dimethylamine and triethylamine), alkali metals (e.g. lithium, sodium, potassium) and alkaline earth metals (e.g. magnesium, calcium) or quaternary ammonium salts. Trimethylsulfonium salt may also be used. When the nitrogen utilization enhancer of this invention contains a chiral center, then all enantiomers, mixtures of enantiomers, and racemates fall within the framework of the present invention. The present invention is further meant to include the nitrogen utilization enhancer when they are in the form of salts with alkali metals, ammonium, or amines, as well as in the form of addition salts with acids.

Not falling within the scope of the claims, the nitrogen utilization enhancers further include also microorganisms selected from the group comprising: *Azotobacter vinelandii, Azospirillum brasilense, Pseudomonas fluorescens, Bacillus polymyxa, Bacillus megaterium, Azorhizobium caulinodens, Azoarcus indigens, and Bacillus sp., phosphobacteria, Streptomyces spp.* The above-described microorganisms are known to the skilled person as bacteria fixing nitrogen to plants. They can be obtained commercially as single species or as a mixture of bacteria to be applied onto plants or to the soil.

All of the nitrogen utilization enhancers including the microorganisms mentioned above are commercially available. MTU can be prepared by processes known to a chemist of ordinary skills, e.g. by a method in which 1,2,3-thiadiazol-5-ylisocyanate is prepared by a conventional method (Kurita K. and Iwakura Y., J. Org. Chem. 41, 2070-71 (1976)) from 1,2,3-thiadiazol-5-ylamine and diphosgene. 1,2,3-thiadiazol-5-ylisocyanate is then allowed to react with 2-methoxyethylamine to give the desired product.

The object of the present invention is therefore a combination for improving plant growth and/or yield comprising MTU and at least one nitrogen utilization enhancer as defined above.

As described herein, the combination of MTU and the at least one nitrogen utilization enhancer demonstrates synergy for several advantageous effects, including:
a) enhanced plant growth in optimal conditions,
b) enhanced plant growth in stress conditions,
c) enhanced plant health (higher level of chlorophyll in the leaves),
d) enhanced quality traits,
e) enhanced yield, and
f) enhanced nitrogen content in leaves.

The synergistically effective amounts of MTU and of the nitrogen utilization enhancer can be determined by the method of determining the root or shoot growth of the plants. Twenty days after sowing, the combination is applied (sprayed) onto the plants in one dose at the desired amounts of 1-(2-methoxyethyl)-3-(1,2,3-thiadiazol-5yl)urea and of at least one nitrogen utilization enhancer. As a first control, MTU is applied to another group of said plants at the same amount as it is the amount of MTU in the studied combination. As a second control, at least one nitrogen utilization enhancer is applied to another group of said plants at the same amount as it is the amount of said at least one nitrogen utilization enhancer in the studied combination. As a negative control, another group of said plants is left without applying any of the compounds under study. The plants are then grown at 16 - 25 °C under natural and/or artificial light for a period of 45 days. The root dry weight (RDW) and/or shoot dry weight (SDW) of a sample of at least 30 plants is measured 45 days after the plants had been sown. The same procedure is applied to the first control plants, to the second control plants, and to the negative control plants. RDW and/or SDW are recorded after drying the plants at 70 °C for 2 days. The relative increase in the root and/or shoot dry weight is calculated compared to the negative control for the first control group, second control group, and for the group to which the combination according to the present invention was applied. If the root and/or shoot dry weight of the group treated with the tested combination of MTU and at least one nitrogen utilization enhancer increases to a higher extent than it is the sum of the root and/or shoot dry weight increase observed for the first and second control group, then the effect of the combination is synergistic, and thus the amounts of MTU and of the nitrogen utilization enhancer in the tested combination are considered to be synergistically effective.

In one preferred embodiment, the nitrogen utilization enhancer is selected from the group consisting of: phosphite (including [HPO₃]²⁻ and/or [H₂PO₃]⁻ anions), glutamine, glycine, glycine betaine (trimethylglycine), 2-oxoglutarate, glutamic acid and glutamate, aspartic acid and aspartate, proline, 5-oxoproline (pyroglutamic acid, PCA), γ-aminobutyric acid (GABA), poly-γ-(glutamic acid) (γ-PGA), diethyl aminoethyl hexanoate (DA6), N-acetyl thiazolidine 4-carboxylic acid (NATCA), and microorganisms selected from the group comprising: *Azotobacter vinelandii, Azospirillum brasilense, Pseudomonas fluorescens, Bacillus polymyxa, Bacillus megaterium, Azorhizobium caulinodens, Azoarcus indigens, and Bacillus sp., phosphobacteria, Streptomyces spp.*

In one embodiment, the nitrogen utilization enhancer is selected from the group consisting of phosphite (including [HPO₃]²⁻ and/or [H₂PO₃]⁻ anions), glutamine, glycine, 2-oxoglutarate, glutamic acid and glutamate, aspartic acid and aspartate, proline, pyroglutamic acid, γ-aminobutyric acid (GABA), poly-γ-(glutamic acid) (γ-PGA), and N-acetyl thiazolidine 4-carboxylic acid (NATCA). Preferably, the nitrogen utilization enhancer is pyroglutamic acid or phosphite. Phosphite is a salt of a phosphonic acid (H-P(=O)(OH)₂), preferably with sodium or potassium cations. Most preferably, the nitrogen utilization enhancer is selected from pyroglutamic acid, Na₂HPO₃ and K₂HPO₃.

In one preferred embodiment, the weight ratio of MTU to the nitrogen utilization enhancer is in the range of from 1:5000 to 1:10, preferably from 1:3500 to 1:25, more preferably from 1:2000 to 1:50, even more preferably from 1:1000 to 1:80, most preferably from 1:500 to 1:100.

In particular, the weight ratio of MTU to the nitrogen assimilation enhancer may be 1:10, 1:12.5, 1:25, 1:50, 1:75, 1: 80, 1:100, 1:125, 1:150, 1:175, 1:200, 1:300.

In one embodiment, the nitrogen utilization enhancer is selected from the group consisting of phosphite, glutamine, glycine, 2-oxoglutarate, glutamic acid and glutamate, aspartic acid and aspartate, proline, pyroglutamic acid, GABA, γ-PGA, and NATCA; and the weight ratio of MTU to the nitrogen utilization enhancer is in the range of from 1:30 to 1:500, preferably from 1:50 to 1:300, more preferably from 1:80 to 1:200, most preferably from 1:100 to 1:125.

In one embodiment, the combination is in the form of aqueous composition (solution) and the concentration of MTU in the composition is from 25 nM to 100 µM, corresponding to from 5 µg to 20 mg of MTU per liter of the composition, depending on the desired type of application. The amount of the nitrogen utilization enhancer in the combination is such to give the synergistic effect, as described above. Preferably, the weight ratios of MTU to the nitrogen utilization enhancer described above are to be applied.

In one embodiment, the combination is in the form of aqueous composition designed for spray applications on the plants. For these applications, the preferred concentration of MTU is in the range of from 2.5 µM to 25 µM, preferably in the range of from 5 µM to 20 µM, more preferably in the range of from 7.5 µM to 15 µM.

In one embodiment, the combination is in the form of aqueous composition designed for application as a watering solution on the plants and to the soil. For these applications, the preferred concentration of MTU is in the range of from 25 nM to 500 nM, preferably in the range of from 50 nM to 250 nM, more preferably in the range of from 75 nM to 150 nM.

In one embodiment, the combination is in the form of composition designed as a seed coating solution. For these applications, the preferred concentration of MTU is in the range of from 10 µM to 100 µM, preferably in the range of from 15 µM to 80 µM, more preferably in the range of from 30 µM to 60 µM, more preferably in the range of from 40 µM to 50 µM.

In the most preferred embodiment, the combination is in the form of aqueous composition for spray applications, and MTU is present in the composition in an amount of from 0.5 mg to 5 mg per liter of the composition, preferably from 1 to 3 mg per liter of the composition, most preferably 2 mg per liter of the composition.

In one embodiment, the combination is in the form of aqueous composition for spray applications, and the nitrogen utilization enhancer is present in the combination in an amount of from 10 to 5000 mg per liter of the composition, preferably from 20 to 1000 mg per liter of the composition, more preferably from 50 to 750 mg per liter of the composition, even more preferably from 100 to 500 mg per liter of the composition, most preferably from 150 to 400 mg per liter of the composition.

In a preferred embodiment, the combination is in the form of aqueous composition for spray applications, and the nitrogen utilization enhancer is selected from the group consisting of phosphite, glutamine, glycine, 2-oxoglutarate, glutamic acid and glutamate, aspartic acid and aspartate, proline, pyroglutamic acid, GABA, γ-PGA, and NATCA; and it is present in the composition in an amount of from 50 to 750 mg per liter of the composition, preferably from 80 to 600 mg per liter of the composition, more preferably from 100 to 400 mg per liter of the composition, most preferably from 150 to 250 mg per liter of the composition. Most preferably, the nitrogen utilization enhancer is phosphite or pyroglutamic acid.

In one embodiment, the nitrogen utilization enhancer is phosphite, preferably Na₂HPO₃ and/or K₂HPO₃. Preferably the combination is in the form of aqueous composition and 1 liter of the composition comprises from 0.5 mg to 5 mg of MTU and from 200 to 2000 mg of phosphite, preferably from 400 to 1600 mg of phosphite.

Preferably, the weight ratio of 1-(2-methoxyethyl)-3-(1,2,3-thiadiazol-5yl)urea to phosphite is in the range of from 1:40 to 1:4000, preferably in the range of from 1:80 to 1:600, more preferably in the range of from 1:200 to 1:400.

In one embodiment, the combination is in the form of aqueous composition and 1 liter of the composition comprises 2 mg of MTU and from 200 to 2000 mg of phosphite, more preferably from 400 to 1600 mg of phosphite. Most preferably, 1 liter of the composition comprises 2 mg MTU and from 600 to 1200 mg of phosphite.

In one embodiment, the nitrogen utilization enhancer is glutamine. Preferably the combination is in the form of aqueous composition and 1 liter of the composition comprises from 0.5 mg to 5 mg of MTU and from 50 to 500 mg of glutamine, preferably from 100 to 300 mg of glutamine. Most preferably, 1 liter of the composition comprises 2 mg MTU and from 100 to 300 mg of glutamine.

In one embodiment, the nitrogen utilization enhancer is glycine. Preferably the combination is in the form of aqueous composition and 1 liter of the composition comprises from 0.5 mg to 5 mg of MTU and from 50 to 500 mg of glycine, preferably from 100 to 400 mg of glycine. Most preferably, 1 liter of the composition comprises 2 mg MTU and from 100 to 300 mg of glycine, preferably from 100 to 250 mg of glycine.

In one embodiment, the nitrogen utilization enhancer is glycine betaine. Preferably the combination is in the form of aqueous composition and 1 liter of the composition comprises from 0.5 mg to 5 mg of MTU and from 0.5 to 5 g of glycine betaine, preferably from 1 to 4 g of glycine betaine. Most preferably, 1 liter of the composition comprises 2 mg MTU and from 2 to 3 g of glycine betaine.

In one embodiment, the nitrogen utilization enhancer is 2-oxoglutarate. Preferably the combination is in the form of aqueous composition and 1 liter of the composition comprises from 0.5 mg to 5 mg of MTU and from 50 to 500 mg of 2-oxoglutarate, preferably from 100 to 400 mg of 2-oxoglutarate. Most preferably, 1 liter of the composition comprises 2 mg MTU and from 100 to 300 mg of 2-oxoglutarate.

In one embodiment, the nitrogen utilization enhancer is glutamic acid. Preferably the combination is in the form of aqueous composition and 1 liter of the composition comprises from 0.5 mg to 5 mg of MTU and from 50 to 500 mg of glutamic acid, preferably from 100 to 400 mg of glutamic acid. Most preferably, 1 liter of the composition comprises 2 mg MTU and from 100 to 300 mg of glutamic acid.

In one embodiment, the nitrogen utilization enhancer is aspartic acid. Preferably the combination is in the form of aqueous composition and 1 liter of the composition comprises from 0.5 mg to 5 mg of MTU and from 100 to 500 mg of aspartic acid, preferably 150 to 350 mg of aspartic acid. Most preferably, 1 liter of the composition comprises 2 mg MTU and from 200 to 300 mg of aspartic acid, preferably 250 mg of aspartic acid.

In one embodiment, the nitrogen utilization enhancer is proline. Preferably the combination is in the form of aqueous composition and 1 liter of the composition comprises from 0.5 mg to 5 mg of MTU and from 100 to 500 mg of proline. Most preferably, 1 liter of the composition comprises 2 mg MTU and from 200 to 400 mg of proline, preferably 250 mg of proline.

In one embodiment, the nitrogen utilization enhancer is γ-aminobutyric acid. Preferably the combination is in the form of aqueous composition and 1 liter of the composition comprises from 0.5 mg to 5 mg of MTU and from 200 to 500 mg of γ-aminobutyric acid, preferably 250 mg of γ-aminobutyric acid. Most preferably, 1 liter of the composition comprises 2 mg MTU and from 200 to 400 mg of γ-aminobutyric acid, preferably 250 mg of γ-aminobutyric acid.

In one embodiment, the nitrogen utilization enhancer is poly-γ-glutamic acid (γ-PGA). Preferably the combination is in the form of aqueous composition and 1 liter of the composition comprises from 0.5 mg to 5 mg of MTU and from 50 to 500 mg of γ-PGA, preferably from 100 to 400 mg of γ-PGA. Most preferably, 1 liter of the composition comprises 2 mg MTU and from 150 to 300 mg of γ-PGA, preferably 250 mg of γ-PGA.

In one embodiment, the nitrogen utilization enhancer is DA6. Preferably the combination is in the form of aqueous composition and 1 liter of the composition comprises from 0.5 mg to 5 mg of MTU and from 10 to 50 mg of DA6, preferably 25 mg of DA6. Most preferably, 1 liter of the composition comprises 2 mg MTU and from 15 to 40 mg of DA6, preferably 20 to 30 mg of DA6.

In one embodiment, the nitrogen utilization enhancer is NATCA. Preferably the combination is in the form of aqueous composition and 1 liter of the composition comprises from 0.5 mg to 5 mg of MTU and from 50 to 500 mg of NATCA, preferably from 100 to 400 mg of NATCA. Most preferably, 1 liter of the composition comprises 2 mg MTU and from 100 to 300 mg of NATCA.

In one embodiment not falling within the scope of the claims, the the nitrogen utilization enhancer is at least one microorganism selected from the group consisting of *Azotobacter vinelandii, Azospirillum brasilense, Pseudomonas fluorescens, Bacillus polymyxa, Bacillus megaterium, Azorhizobium caulinodens, Azoarcus indigens, and Bacillus sp., phosphobacteria, Streptomyces spp.* Commercially available coctails of the microorganisms are for example BactoFil A10^{®} (contains: *Azotobacter vinelandii, Azospirillum brasilense, Pseudomonas fluorescens, Bacillus polymyxa, Bacillus megaterium*) and Nitroguard^{®} (contains: *Azorhizobium caulinodens, Azoarcus indigens, and Bacillus sp., phosphobacteria, Streptomyces spp*.). Preferably the combination is in the form of aqueous composition and 1 liter of the composition comprises from 0.5 mg to 5 mg of MTU and from 4.0 x 10⁸ to 4.0 x 10¹⁵ bacterial cells of the said bacterial species. Most preferably, 1 liter of the composition comprises 2 mg MTU and from 4.0 x 10¹⁰ to 4.0 x 10¹² bacterial cells of the said bacterial species.

In a preferred embodiment, the nitrogen utilization enhancer is pyroglutamic acid - PCA (L-isomer, D-isomer or a mixture thereof). The respective isomers of pyroglutamic acid are depicted in Scheme 2 below.

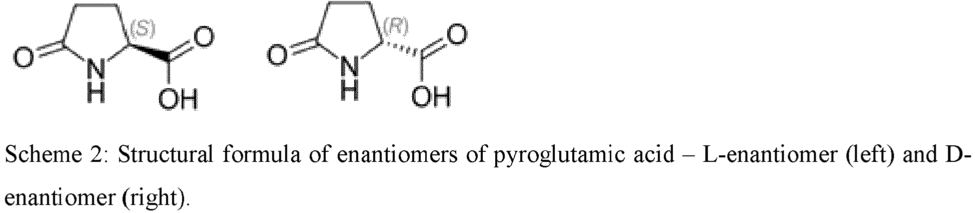

In the combination according to the present invention, both enantiomers of PCA may be used as nitrogen utilization enhancers individually or in any mutual ratio, for example as a racemic mixture or in a ratio 80:20 of the L-isomer to the D-isomer. Most preferably, L-enantiomer is used.

Preferably, the combination is in the form of aqueous composition and 1 liter of the composition comprises from 0.5 to 5 mg of MTU and from 125 to 1000 mg of pyroglutamic acid, more preferably from 200 to 750 mg of pyroglutamic acid, even more preferably from 250 to 500 mg of pyroglutamic acid, even more preferably from 300 to 450 mg of pyroglutamic acid, even more preferably from 350 to 400 mg of pyroglutamic acid. Therefore, the weight ratio of MTU to pyroglutamic acid is in the range of from 1:25 to 1:2000. More preferably, the weight ratio of MTU to pyroglutamic acid is in the range of from 1:30 to 1: 1500, even more preferably the weight ratio of MTU to pyroglutamic acid is in the range of from 1:50 to 1:500. Most preferably, the weight ratio of MTU to pyroglutamic acid is in the range of from 1:80 to 1:250.

In one embodiment, the combination is in the form of aqueous composition and 1 liter of the composition comprises 2 mg of MTU and from 125 to 1000 mg of pyroglutamic acid, more preferably from 200 to 750 mg of pyroglutamic acid, even more preferably from 250 to 500 mg of pyroglutamic acid, even more preferably from 300 to 450 mg of pyroglutamic acid.

The object of the present invention is also a growth-enhancing and/or anti-stress formulation for plants, which comprises any of the combinations described above and at least one additive (such as a fertilizer or pesticide or micronutrients) and/or which comprises any of the combinations described above and at least one agronomically acceptable excipient, conventionally employed in the art of preparations. The agronomically acceptable excipients may for example be selected from the group comprising solid and liquid carriers, surfactants, anti-transpirants, wetting agents, preservatives, stabilizers, emulsifiers, antifoams, viscosity regulators, binders, tackifiers, and solubilizing agents.

In one embodiment, the growth-enhancing and/or anti-stress formulation contains from 0.1 to 95 % (w/w) of the active ingredient mixture (thus the combination of MTU and the at least one nitrogen utilization enhancer as defined above), and from 5 to 99.9 % (w/w) of either the additive or the agronomically acceptable excipient.

In one preferred embodiment, the growth-enhancing and/or anti-stress formulation contains all three components mentioned above, thus it comprises the combination of MTU and the at least one nitrogen utilization enhancer as defined above, at least one additive, and at least one agronomically acceptable excipient. Preferably, the formulation contains from 0.1 to 95 % (w/w) of the active ingredient mixture (thus the combination of MTU and the at least one nitrogen utilization enhancer), from 1 to 99.5 % (w/w) of the agronomically acceptable excipients defined above, and from 0,4 to 4 % (w/w) of the additive.

In one embodiment, the additive is a fertilizer, preferably N-fertilizer, more preferably selected from the group comprising urea, nitrates (such as ammonium nitrate), and sulphates (such as ammonium sulphate). A skilled person would be familiar with various fertilizers and their quantities that may be employed.

In one embodiment, the additive is a pesticide such as herbicide, fungicide, or insecticide. The fungicide may be selected from the group comprising strobilurins. A skilled person would be familiar with various herbicides or fungicide or insecticide and their quantities that may be employed.

In one embodiment, the additive is at least one micronutrient. The micronutrients may be selected from the group comprising donors of boron, chlorine, copper, iron, manganese, molybdenum, zinc, and nickel. A skilled person would be familiar with various micronutrients and their quantities that may be employed.

A carrier is an organic or inorganic natural or synthetic material with which the combination of MTU and a nitrogen utilization enhancer according to the present invention can be associated to facilitate the application of the combination to plants, seeds or soil. The carrier may be water, including distilled and tap water, clays, natural or synthetic silicates, resins or waxes, alcohols, ketones, etc.

A surfactant assists penetration of MTU and of the nitrogen utilization enhancer into plants, seeds or soil. The surfactants include anionic, cationic, non-ionic, and zwitterionic surfactants. Examples of suitable surfactants are listed, for example, in WO 97/34485.

A suitable wetting agent is e.g. glycerol.

Preservative agent can be bronopol (2-bromo-2-nitro-1,3-propanediol).

Stabilizers can be vegetable oils or epoxidized vegetable oils (epoxidized coconut oil, rapeseed oil or soybean oil).

Antifoams can be e.g. silicone oil.

Tackifiers can be rosin and resin esters.

Solubilizing agents can be water, lower alcohols such as ethanol, propanol, isopropanol. Nutrient uptake agents can be methyl sulfonyl methane.

Anti-transpirants can be pinen, pinolene or other terpenes.

The formulations according to the present invention may be formulated as concentrates as well as suspensions, dispersions, water solutions, emulsions, creams, gels, oil suspensions, powders, granulates. Depending on the type of formulation, a method of application is chosen according to the intended use and circumstances. The method of application can be selected from the group comprising spraying, atomizing, dusting, scattering, coating, pouring.

The combination according to the present invention may be applied to whole plants for promoting plant growth and yield and for enhancing the nitrogen uptake by the plants. It may also be applied to plant seeds, as a germination medium or as a seed coating for enhancing seed germination.

A skilled person would be familiar with various seed coating compositions known in the art that may be employed.

In a most preferred embodiment, the formulations according to the present invention are to be applied by spraying to the plants.

In certain aspects of the invention, the combination comprising MTU and nitrogen utilization enhancer according to the present invention is for use in agriculture, particularly in the production of crops, such as wheat, barley, corn, rice, rye, oat, sorghum, and related species; beet, such as sugar beet and fodded beet; pomes, drupes and soft fruit, such as apples, pears, plums, peaches, almonds, cherries, strawberries, blackberries); leguminous plants, such as beans, lentils, peas, soybeans; oil plants, such as rape, mustard, poppy, olives, sunflowers, coconut, Ricinus, cocoa beans, groundnuts; cucumber plants, such as pumpkins, cucumbers, melons; fiber plants, such as cotton, flax, hemp, jute; citrus fruits, such as oranges, lemons, grapefruits, mandarins; vegetables, such as spinach, cinnamomum, camphor; or plants such as tobacco, nuts, eggplants, sugar cane, tea, vine grapes, hops, bananas, and natural rubber and medicinal plants, as well as ornamentals. Crops include those which have been rendered tolerant towards classes of growth factors by conventional breeding methods or genetic engineering methods.

In another aspect, the subject matter described herein is directed to methods of increasing plant growth, stress resistance, and yields, comprising the step of applying the combination described above onto the plant, the seed or to the soil in the proximity of the plant. By the proximity of the plant is meant an area reachable by plant roots. Most preferably this area is within a radius of 1 m from the plant. Thus another object of the present invention is a method of increasing plant growth, stress resistance, and yields, which comprises the step of applying the combination of 1-(2-methoxyethyl)-3-(1,2,3-thiadiazol-5yl)urea and the at least one nitrogen utilization enhancer or of the formulation as defined above, to the plant, the seed and/or to the soil in the proximity of the plant. Said plants are preferably selected from the group comprising crops such as wheat, barley, oilseed rape, sunflower, maize, potatoes, beet, pomes, drupes and soft fruit, leguminous plants, soybeans, oil plants, cucumber plants, fiber plants, citrus fruits, vegetables, tobacco, nuts, eggplants, sugar cane, tea, vine grapes, hops, bananas, natural rubber, medicinal plants, ornamentals.

The step of applying the combination described above onto the plant, the seed or to the soil in the proximity of the plant may be performed by spraying the combination on the plants, by watering the plants and/or by coating the seeds before sowing.

For spray applications, the preferred concentration of MTU is in the range of from 2.5 µM to 25 µM.

For applications in a watering solution on the plants and to the soil, the preferred concentration of MTU is in the range of from 25 nM to 500 nM.

For applications in a seed coating solution, the preferred concentration of MTU is in the range of from 10 µM to 100 µM.

For all types of applications the weight ratio of MTU: nitrogen utilization enhancer is as described above.

In one embodiment of the method, the combination of 1-(2-methoxyethyl)-3-(1,2,3-thiadiazol-5yl)urea and the at least one nitrogen utilization enhancer, or the formulation containing thereof, are applied sequentially, which means in at least two different periods of plant life-cycle.

In another embodiment of the method, the combination of 1-(2-methoxyethyl)-3-(1,2,3-thiadiazol-5yl)urea and the at least one nitrogen utilization enhancer or the formulation containing thereof are applied simultaneously, which means in one single period of plant life-cycle.

In one embodiment of the method, 1-(2-methoxyethyl)-3-(1,2,3-thiadiazol-5yl)urea and the at least one nitrogen utilization enhancer are applied in a single composition.

In one embodiment of the method, 1-(2-methoxyethyl)-3-(1,2,3-thiadiazol-5yl)urea and the at least one nitrogen utilization enhancer are in two different compositions, and are applied separately. The combination according to the present invention is thus formed only after the application of both compositions.

In a preferred embodiment, the step of applying the combination of 1-(2-methoxyethyl)-3-(1,2,3-thiadiazol-5yl)urea and the at least one nitrogen utilization enhancer or of the formulation defined above (independent of whether these components are applied sequentially or simultaneously) comprises applying 1-(2-methoxyethyl)-3-(1,2,3-thiadiazol-5yl)urea at a rate of from 100 mg/ha to 2,5 g/ha and of the at least one nitrogen utilization enhancer at a rate of from 25 g/ha to 500 g/ha.

Another object of the present invention is thus the use of the combination defined above in agriculture for increasing plant growth, stress resistance (wherein the stress is caused by dryness and/or heat and/or cold and/or salinity), and yields; preferably in production of crops such as wheat, barley, rice, maize, oilseed rape, sunflower, potatoes, beet, pomes, drupes and soft fruit, leguminous plants, soybeans, oil plants, cucumber plants, fiber plants, citrus fruits, vegetables, tobacco, nuts, eggplants, sugar cane, tea, vine grapes, hops, bananas, natural rubber, medicinal plants, ornamentals. The combination can also be used for increasing nitrogen content in the leaves and seeds, of the total chlorophyll content and/or the grain or seed yields.

In a preferred embodiment, the growth-enhancing and/or anti-stress formulations suitable for use in agriculture defined above, wherein the formulations comprise MTU, at least one nitrogen utilization enhancer, and at least one agronomically acceptable excipient and/or additive, have the following compositions: (% = percent by weight)

The active ingredient mixture refers to the combination of MTU and at least one nitrogen utilization enhancer with the composition and mutual ratio as defined above.

### Emulsifiable concentrates:

active ingredient mixture: 5 to 90 %, surfactant: 1 to 30 %, liquid carrier: 5 to 99 %

### Dusts:

active ingredient mixture: 0.1 to 10 %, solid carrier: 99.9 to 90 %,

### Suspension concentrates:

active ingredient mixture: 0.5 to 75 %, water: 95 to 24 %, surfactant: 1 to 30 %,

### Wettable powders:

active ingredient mixture: 0.5 to 90 %, surfactant: 0.5 to 20 %, solid carrier: 5 to 95 %,

### Granules:

active ingredient mixture: 0.1 to 30 %, solid carrier: 99.9 to 70 %.

Further agronomically acceptable excipients may be stabilizers, e.g. vegetable oils or epoxidized vegetable oils (epoxidized coconut oil, rapeseed oil or soybean oil), anti-foams, e.g. silicone oil, preservatives, viscosity regulators, binders, tackifiers, and also fertilizers or other additives, such as fertilizers and/or herbicides. For the use of the compositions according to the present invention, various methods and techniques come into consideration, such as, for example, the following:

### i) Seed dressing

a) Dressing of the seeds with a wettable powder formulation of the composition according to the present invention by shaking in a vessel until uniformly distributed over the seed surface (dry dressing). In that procedure approximately from 0.2 to 500 g of the active ingredient mixture (4 g to 2 kg of wettable powder) are used per 100 kg of seed.
b) Dressing of the seeds with an emulsifiable concentrate of the composition according to the present invention according to method a) (wet dressing).
c) Dressing by immersing the seeds for from 1 to 72 hours in a liquor comprising the composition according to the present invention, and preferably subsequently drying the seeds (immersion dressing).

### ii) Application as a tank mixture

A liquid formulation is used in the amount of 0.05 to 5.0 kg/ha. Such tank mixtures are applied before or after sowing. The final dose of MTU, applied together with at least one nitrogen utilization enhancer as a tank mixture, is from 0.1 to 2.5 g of MTU per hectare.

### iii) Application to the seed furrow

The combination or formulation according to the present invention is introduced into the open sown seed furrow in the form of an emulsifiable concentrate, wettable powder or granules.

### iv) Controlled release of the active ingredient mixture

The combination or formulation according to the present invention is applied in solution to mineral granule carriers or polymerized granules (urea/formaldehyde) and dried. If desired, it is also possible to apply a coating that allows the active ingredients to be released in metered amounts over a specific period of time (coated granules).

### Brief description of drawings

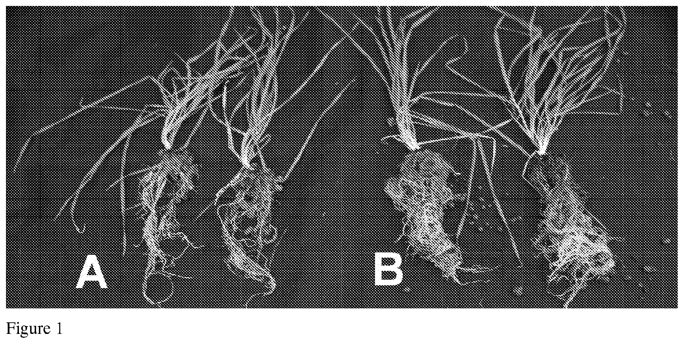

Figure 1: Comparison of average appearance of 45 days-old wheat plants which were grown under drought stress conditions (left (A) - untreated plants; right (B) - plants treated by a combination of 2 mg of MTU with 400 mg of pyroglutamic acid dissolved in water to give 1 liter of the spraying composition).

### Examples

As disclosed herein, laboratory data, greenhouse data, and field trial data evidence that the combinations of MTU and a nitrogen utilization enhancer set forth below provide synergistic effects on plant growth, health, and yield.

### Method of testing the synergistically effective amounts

The synergistically effective amounts of MTU and pyroglutamic acid (PCA) were determined by the method of determining the root growth of winter wheat plants. Twenty days after sowing, the combinations of MTU/PCA were applied (sprayed) onto the winter wheat plants in one dose at the following weight ratios: 1:200, 2:200, 4:200 and 8:200. Their concentrations in the aqueous composition are listed in Table 1 below.

As a first control, MTU was applied to another group of the winter wheat plants at the following amounts: 1, 2, 4 and 8 mg/liter of the composition.

As a second control, PCA was applied to another group of the winter wheat plants at the amount of 200 mg/liter of the composition.

As a negative control, another group of the winter wheat plants was applied only water in the same amount as the compositions applied to the above-described groups.

The plants were then grown at 20 °C under natural light for a period of 45 days. The root dry weight (RDW) of at least 30 plants was measured 45 days after the plants had been sown for each group. RDW was recorded after drying the plants at 70 °C for 2 days. The results are shown in Table 1.

The relative increase in RDW was calculated as % of control (Table 1). The % of control for combinations containing MTU:PCA in ratios 1:200, 2:200 and 4:200 was higher than the sum of % of control of only PCA group (+ 8.8 %) with the MTU group (1, 2 or 4 mg). The synergistic effect was thus proved.

On the other hand, the sum of % of second control for PCA (+ 8.8 %) and first control for 8 mg MTU (+ 18.1 %) is 26.9 %, which is higher than the % of the combination MTU:PCA in ratio 8:200 (+ 25.3 %). Therefore, the combination of MTU and PCA in weight ratio 8:200 does not show a synergistic effect.

**Table 1. Root dry weight of winter wheat grown in optimal conditions and treated by indicated compound or mixture of compounds. Bold numbers indicate synergism. x - means not applicable.**

| Application | concentration in 1 liter of composition | RDW (g) | % of control | Synergism YES/NO |
|---|---|---|---|---|
| Negative control | | 0,91 | 100 % | x |
| MTU (first control) | 1 mg | 0,96 | + 5,5 | x |
| MTU (first control) | 2 mg | 0,98 | + 7,7 | x |
| MTU (first control) | 4 mg | 1,05 | + 15,4 | x |
| MTU (first control) | 8 mg | 1,07 | + 18,1 | x |
| PCA (second control) | 200 mg | 0,99 | + 8,8 | x |
| MTU/PCA | 1 mg/200 mg | 1,09 | + **19,8** | YES |
| MTU/PCA | 2 mg/200 mg | 1,13 | + **24,8** | YES |
| MTU/PCA | 4 mg/200 mg | 1,15 | + **26,4** | YES |
| MTU/PCA | 8 mg/200 mg | 1,14 | + 25,3 | NO |

### Preparation of Compositions

### Example 1

### The combination of MTU and nitrogen utilization enhancers show a synergistic effect on root and shoot growth and nitrogen content in the leaves in wheat under optimal conditions.

To investigate the effect of the combinations on the weight parameters, the seeds of wheat *(Triticum aestivum)* cv. Balitus were sown in a hydroponic growing system (Araponics, Liege, Belgium) using Hoagland's solution (control). Twenty days after sowing, plants (except for control plants) were sprayed by aqueous solution of either MTU (10 µM) or by a nitrogen utilization enhancer alone or by a combination of MTU (10 µM) with the nitrogen utilization enhancer. The concentration of the compounds applied is indicated in Table 2. The plants were grown in the Czech Republic in a glasshouse at 16 - 25 °C under natural and artificial light during the winter period. The root dry weight (RDW), shoot dry weight (SDW) and the nitrogen content in the leaves of at least 30 plants were measured 45 days after the plants had been sown. RDW and SDW were recorded after drying the plants at 70 °C for 2 days. The nitrogen content in the leaves was determined using a Kjeldahl method (Kjeldahl, J. (1883) "New method for the determination of nitrogen in organic substances), Zeitschrift für analytische Chemie, 22 (1): 366-383.

From the results obtained (Table 2), it is clear that the application of MTU alone has only a very slight positive effect on root and shoot dry weight. Nitrogen utilization enhancers increased root or shoot dry weight by units of percent, but not more than 15 %. The combined treatment of MTU with the nitrogen utilization enhancer increased root or shoot dry weight in all cases by more than 10 %, but usually by 20 to 30 %. In all cases, the increase was larger than would be the additive effect of single treatments of MTU or of the nitrogen utilization enhancer. Thus, the effect of combined treatment was in all cases synergistic, clearly demonstrating the synergistic action of MTU with the action of all tested nitrogen utilization enhancers.

Analysis of nitrogen content in the leaves also demonstrates that plants treated by a combination of MTU with nitrogen utilization enhancers are able to absorb and utilize more nitrogen. Untreated plants (control) contained only 4.41 % (w/w) of nitrogen in the leaves. MTU treatment increased nitrogen content in the leaves only negligibly to 4.47 % (w/w). However, a clear synergistic effect on nitrogen content in the leaves was observed when MTU was combined with the selected nitrogen utilization enhancers (Table 2).

A synergistic effect on the improvement of wheat weight parameters and content of nitrogen in the leaves was also observed when MTU was combined with specific bacteria. These microorganisms enhance the availability of nitrogen and other micronutrients to plants. The tested preparations were the commercially available BactoFil A10^{®} (contains: *Azotobacter vinelandii, Azospirillum brasilense, Pseudomonas fluorescens, Bacillus polymyxa, Bacillus megaterium*) and Nitroguard^{®} (contains: *Azorhizobium caulinodens, Azoarcus indigens, and Bacillus sp., phosphobacteria, Streptomyces spp.).*

**Table 2. Dry weight parameters of winter wheat grown in optimal conditions and treated by indicated compound or mixture of compounds. Bold letters show synergism.**

| Application | concentration | RDW (g) | % of control | SDW (g) | % of control | Nitrogen content (weight %) |
|---|---|---|---|---|---|---|
| Control | | 0.80 | 100 | 1.52 | 100 | 4.41 |
| *MTU* | *2 mg*/*L* | *0.83* | *+ 3.8* | *1.58* | *+ 3.9* | 4.47 |
| Phosphite | 600 mg/L | 0.95 | + 18.8 | 1.74 | + 14.5 | 4.81 |
| MTU/Phosphite | 2/600 mg/L | **1.13** | **+ 41.3** | **1.93** | **+ 27.0** | **5.22** |
| glutamine | 100 mg/L | 0.88 | + 10.0 | 1.60 | + 5.3 | - |
| glutamine | 250 mg/L | 0.90 | + 12.5 | 1.62 | + 6.6 | 4.59 |
| MTU/glutamine | 2/100 mg/L | **0.95** | **+ 18.8** | **1.73** | **+ 13.8** | **-** |
| MTU/glutamine | 2/250 mg/L | **1.02** | **+ 27.5** | **1.76** | **+ 15.8** | **4.73** |
| | | | | | | |
| glycine | 100 mg/L | 0.84 | + 5.0 | 1.61 | + 5.9 | - |
| glycine | 250 mg/L | 0.86 | + 7.5 | 1.65 | + 8.6 | 4.64 |
| MTU/glycine | 2/100 mg/L | **0.96** | **+ 20.0** | **1.75** | **+ 15.1** | **-** |
| MTU/glycine | 2/250 mg/L | **1.01** | **+ 26.3** | **1.80** | **+ 18.4** | **4.85** |
| | | | | | | |
| 2-oxoglutarate | 100 mg/L | 0.87 | + 8.8 | 1.60 | + 5.3 | - |
| 2-oxoglutarate | 250 mg/L | 0.91 | + 13.8 | 1.65 | + 8.6 | 4.67 |
| MTU/2-oxoglutarate | 2/100 mg/L | **1.00** | **+ 25.0** | **1.77** | **+ 16.4** | **-** |
| MTU/2-oxoglutarate | 2/250 mg/L | **1.04** | **+ 30.0** | **1.81** | **+ 19.1** | **4.87** |
| | | | | | | |
| Glutamic acid | 100 mg/L | 0.85 | + 6.3 | 1.55 | + 2.0 | - |
| Glutamic acid | 250 mg/L | 0.92 | + 15.0 | 1.58 | + 3.9 | 4.56 |
| MTU/Glutamic acid | 2/100 mg/L | **1.04** | **+ 30.0** | **1.69** | **+ 11.2** | **-** |
| MTU/Glutamic acid | 2/250 mg/L | **1.03** | **+ 28.8** | **1.72** | **+ 13.2** | **4.78** |
| | | | | | | |
| Aspartic acid | 250 mg/L | 0.92 | + 15.0 | 1.50 | - 1.3 | 4.53 |
| MTU/ Aspartic acid | 2/250 mg/L | **1.02** | **+ 27.5** | **1.65** | **+ 8.6** | **4.67** |
| | | | | | | |
| Proline | 250 mg/L | 0.86 | + 7.5 | 1.57 | + 3.3 | 4.69 |
| MTU/proline | 2/250 mg/L | **1.0** | **+ 25.0** | **1.72** | **+ 13.2** | **4.81** |
| | | | | | | |
| Pyroglutamic acid | 200 mg/L | 0.85 | + 6.3 | 1.63 | + 6.8 | - |
| Pyroglutamic acid | 400 mg/L | 0.91 | + 13.8 | 1.68 | + 10.5 | 4.65 |
| MTU/Pyroglutamic acid | 2/200 mg/L | **0.93** | **+ 16.3** | **1.82** | **+ 19.7** | **-** |
| MTU/Pyroglutamic acid | 2/400 mg/L | **1.04** | **+ 30.0** | **1.87** | **+ 23.0** | **5.14** |
| | | | | | | |
| γ-PGA | 250 mg/L | 0.84 | + 5.0 | 1.62 | + 6.6 | 4.74 |
| MTU/γ-PGA | 2/250 mg/L | **0.98** | **+ 22.5** | **1.78** | **+ 17.1** | **5.06** |
| | | | | | | |
| GABA | 200 mg/L | 0.84 | + 5.0 | 1.59 | +4.6 | 4.82 |
| MTU/GABA | 2/200 mg/L | **0.92** | **+ 15.0** | **1.73** | **+13.8** | **5.18** |
| | | | | | | |
| DA6 | 25 mg/L | 0.87 | + 8.8 | 1.61 | + 5.9 | 4.53 |
| MTU/DA6 | 2/25 mg/L | **0.99** | **+ 23.8** | **1.70** | **+ 11.8** | **4.80** |
| | | | | | | |
| NATCA | 100 mg/L | 0.9 | + 12.5 | 1.63 | + 7.2 | 4.77 |
| MTU/NATCA | 2/100 mg/L | **1.02** | **+ 27.5** | **1.75** | ***+* 15.1** | **4.97** |
| | | | | | | |
| BactoFil A10^{®} | 4.0 x 10¹² bacterial cells/L | 0.91 | + 13.0 | 1.64 | + 7.9 | 4.68 |
| MTU/ BactoFil A10^{®} | 2 mg/4.0 x 10¹² bacterial cells/L | **1.05** | **+ 31.0** | **1.80** | **+ 18.4** | **4.89** |
| | | | | | | |
| Nitroguard^{®} | 4.0 x 10¹² bacterial cells/L | 0.86 | + 7.5 | 1.61 | + 6.3 | 4.80 |
| MTU/Nitroguard^{®} | 2 mg/4.0 x 10¹² bacterial cells/L | **1.02** | **+ 27.5** | **1.74** | **+ 13.8** | **5.11** |

### Example 2

### The combination of MTU and nitrogen utilization enhancers show a synergistic effect on root and shoot growth and total chlorophyll content in wheat under drought stress conditions.

To investigate the effect of the combinations on the weight parameters, and the total content of chlorophyll, seeds of wheat (*Triticum aestivum*) cv. Balitus were sown in a hydroponic growing system (Araponics, Liege, Belgium) using Hoagland's solution (control). Twenty days after sowing plants (except for control plants) were sprayed by either MTU (10 µM) or by nitrogen utilization enhancers alone or with a combination of MTU (10 µM) and nitrogen utilization enhancers. The concentration of the compounds applied is indicated in Table 3. The plants were grown in a glasshouse at 20 - 28 °C under a combination of natural and artificial light. Since the treatment (20 days after sowing), the plants received low water doses. The relative water content was 73 % and 48 %, 30 and 45 days after sowing, respectively. The root dry weight (RDW), shoot dry weight (SDW), and total chlorophyll content (TCC) of at least 25 plants were measured at the end of the experiment - 45 days after the plants had been sown. RDW and SDW were recorded after drying the plants at 70 °C for 2 days. The chlorophyll content of each plant was measured by SPAD meter reading at the end of the experiment and TCC was calculated as SPAD value per SDW.

As shown in Table 3, MTU increased RDW by 10.4 %. Nitrogen utilization enhancers also increased the RDW under stress conditions by 7.5 up to 20 %. However, the combined treatment increased the RDW by 30 up to 52 %. The highest increase in RDW was recorded after using the combination of MTU with pyroglutamic acid (Figure 1). In all cases, the increase was larger than would be the additive effect of single treatments, clearly demonstrating the synergistic action of MTU with the action of all tested nitrogen utilization enhancers in drought stress conditions. The same situation occurred with SDW, which increased only by 4.9 % after MTU application. Application of tested compounds in most cases also increased SDW up to 15 %. However, combined treatment by MTU with tested nitrogen utilization enhancers increased SDW by 15 up to 36 %. In all cases, the effect was again synergistic. The total chlorophyll content was also significantly higher in all plants treated by combined treatment than in plants treated by a single compound/formulation, and to that extent which is higher than the additive effect of single treatments. Again, MTU with each of the tested nitrogen utilization enhancers showed synergism in the retardation of chlorophyll in plants that were grown under drought stress conditions.

Again, MTU showed a synergistic effect on wheat weight parameters when it was used in combination with commercial products containing microorganisms.

**Table 3. Dry weight parameters and total chlorophyll content (TCC) of winter wheat grown in drought stress conditions and treated by indicated compound or mixture of compounds. Bold letters show synergism.**

| Application | concentration | RDW (g) | % of control | SDW (g) | % of control | TCC % |
|---|---|---|---|---|---|---|
| Control | | 0.67 | 100 | 1.22 | 100 | 100 |
| *MTU* | *2 mg*/*L* | *0.74* | *+ 10.4* | *1.28* | +*4.9* | *112* |
| Phosphite | 600 mg/L | 0.78 | + 16.4 | 1.32 | + 8.2 | 105 |
| MTU/Phosphite | 2/600 mg/L | **0.90** | **+ 34.3** | **1.50** | **+ 23.0** | **136** |
| | | | | | | |
| glutamine | 100 mg/L | 0.74 | + 10.4 | 1.31 | + 7.4 | 108 |
| glutamine | 250 mg/L | 0.78 | + 16.4 | 1.36 | + 11.5 | 111 |
| MTU/glutamine | 2/100 mg/L | **0.93** | **+ 38.8** | **1.55** | **+ 27.0** | **125** |
| MTU/glutamine | 2/250 mg/L | **0.89** | **+ 32.8** | **1.61** | **+ 32.0** | **141** |
| | | | | | | |
| glycine | 100 mg/L | 0.72 | + 7.5 | 1.29 | + 5.7 | 110 |
| glycine | 250 mg/L | 0.76 | + 13.4 | 1.36 | + 11.5 | 114 |
| MTU/glycine | 2/100 mg/L | **0.89** | **+ 32.8** | **1.45** | **+ 18.9** | **129** |
| MTU/glycine | 2/250 mg/L | **0.95** | **+ 41.8** | **1.53** | **+ 25.4** | **138** |
| | | | | | | |
| Glycine betaine | 5 g/L | 0.70 | + 4.5 | 1.31 | + 7.4 | 110 |
| MTU/Glycine betaine | 2 mg/5 g/L | **0.81** | **+ 20.9** | **1.42** | **+ 16.4** | **126** |
| | | | | | | |
| 2-oxoglutarate | 100 mg/L | 0.75 | + 11.9 | 1.35 | + 10.7 | 107 |
| 2-oxoglutarate | 250 mg/L | 0.78 | + 16.4 | 1.4 | + 14.8 | 112 |
| MTU/2-oxoglutarate | 2/100 mg/L | **0.98** | **+ 46.3** | **1.58** | **+ 29.5** | **135** |
| MTU/2-oxoglutarate | 2/250 mg/L | **0.99** | **+ 47.8** | **1.62** | **+ 32.8** | **148** |
| | | | | | | |
| Glutamic acid | 100 mg/L | 0.73 | + 9.0 | 1.27 | + 4.1 | 105 |
| Glutamic acid | 250 mg/L | 0.8 | + 19.4 | 1.26 | + 3.3 | 106 |
| MTU/Glutamic acid | 2/100 mg/L | **0.93** | **+ 38.8** | **1.47** | **+ 20.5** | **128** |
| MTU/Glutamic acid | 2/250 mg/L | **0.97** | **+ 44.8** | **1.51** | **+ 23.8** | **133** |
| | | | | | | |
| Aspartic acid | 250 mg/L | 0.77 | + 14.9 | 1.26 | + 3.3 | 107 |
| MTU/ Aspartic acid | 2/250 mg/L | **0.96** | **+ 43.3** | **1.44** | **+ 18.0** | **131** |
| | | | | | | |
| Proline | 250 mg/L | 0.72 | + 7.5 | 1.28 | + 4.9 | 111 |
| MTU/proline | 2/250 mg/L | **0.99** | **+ 47.8** | **1.63** | **+ 33.6** | **137** |
| | | | | | | |
| Pyroglutamic acid | 200 mg/L | 0.75 | + 11.9 | 1.2 | -1.6 | 106 |
| Pyroglutamic acid | 400 mg/L | 0.77 | + 14.9 | 1.23 | + 0.8 | 110 |
| MTU/Pyroglutamic acid | 2/200 mg/L | **0.91** | **+ 35.8** | **1.41** | **+ 15.6** | **144** |
| MTU/Pyroglutamic acid | 2/400 mg/L | **1.02** | **+ 52.2** | **1.43** | **+ 17.2** | **155** |
| | | | | | | |
| γ-PGA | 250 mg/L | 0.73 | + 9.0 | 1.25 | + 2.5 | 112 |
| MTU/γ-PGA | 2/250 mg/L | **0.88** | **+ 31.3** | **1.46** | **+ 19.7** | **141** |
| | | | | | | |
| DA6 | 20 mg/L | 0.76 | + 13.4 | 1.3 | + 6.6 | 110 |
| MTU/DA6 | 2/20 mg/L | **0.92** | **+ 37.3** | **1.52** | **+ 24.6** | **133** |
| | | | | | | |
| NATCA | 100 mg/L | 0.75 | + 11.9 | 1.34 | + 9.8 | 116 |
| MTU/NATCA | 2/100 mg/L | **0.92** | **+ 37.3** | **1.58** | **+ 29.5** | **143** |
| | | | | | | |
| BactoFil A10^{®} | 4.0 x 10¹² bacterial cells/L | 0.78 | + 16.4 | 1.39 | + 13.9 | 113 |
| MTU/BactoFil A10^{®} | 2 mg/4.0 x 10¹² bacterial cells/L | **0.93** | **+ 38.8** | **1.66** | **+ 36.1** | **147** |
| | | | | | | |
| Nitroguard^{®} | 4.0 x 10¹² bacterial cells/L | 0.74 | + 10.4 | 1.31 | + 7.4 | 115 |
| MTU/Nitroguard^{®} | 2 mg/4.0 x 10¹² bacterial cells/L | **0.94** | **+ 40.2** | **1.45** | **+ 18.9** | **136** |

### Example 3

### The combination of MTU and pyroglutamic acid shows the synergistic effect on grain yield improvement in wheat in field conditions

The field experiments were done in 2019 in the UK and they were performed in accordance with the Good Experimental Practice criteria. Winter wheat variety Barrel was used. MTU was applied by spraying at a concentration of 10 µM (2 mg/L) and a dosage of 200 L/ha (0.4 g/ha of MTU). Pyroglutamic acid was used at 40 g/ha, applied at a dose of 200 l/ha in a water solution. Treatment timings are shown in Table 3.

From the results obtained (Table 4) it is clear that the combined application of MTU with pyroglutamic acid has a synergistic effect on the grain yield of winter wheat. This applies to applications in all growth stages tested.

**Table 4. Grain yield of field-grown winter wheat treated by MTU, pyroglutamic acid, or by a combination of MTU with pyroglutamic acid. Asterisks indicate statistically significant differences from the control treatment, determined by the two-tailed Student's t-test at P-values of 0.1 >P.**

| Treatment | Growth stage of the application (BBCH scale) | Yield (t/ha) | % of control |
|---|---|---|---|
| Control | - | 9.986 | 100 % |
| MTU | 32 | 10.225 | + 2.4 % |
| pyroglutamic acid | 32 | 10.167 | + 1.8 % |
| MTU + pyroglutamic acid | 32 | **10.554** | + 5.7 % |
| | | | |
| MTU | 39 | 10.230 | + 2.4 % |
| pyroglutamic acid | 39 | 10.183 | + 2.0 % |
| MTU + pyroglutamic acid | 39 | **10.622*** | **+ 6.4 %** |
| | | | |
| MTU | 50-55 | 10.033 | + 0.5 % |
| pyroglutamic acid | 50-55 | 10.241 | +2.6% |
| MTU + pyroglutamic acid | 50-55 | **10.933*** | **+ 9.5 %** |

### Example 4

### The combination of MTU and pyroglutamic acid show the synergistic effect on nitrogen content in grains of winter wheat grown in field conditions

Grain nitrogen content is a major determinant of grain quality in winter wheat. Wheat grains used to make bread require a grain nitrogen content of 2.1 % (w/w) or higher. Grains from each sample treatment from the experiment described in Example 3 were analyzed for nitrogen content. The analysis was done using a Kjeldahl method (Kjeldahl, J. (1883) "New method for the determination of nitrogen in organic substances), Zeitschrift für analytische Chemie, 22 (1): 366-383.

Data in Table 5 show that treatment by either MTU or pyroglutamic acid resulted in a significantly decreased content of nitrogen in grains when compared to the control. This is a quite common phenomenon - when grain yield increases, the content of nitrogen usually decreases. Apparently, neither MTU nor pyroglutamic acid applied alone did increase nitrogen utilization by wheat plants. Surprisingly, when MTU was combined with pyroglutamic acid and applied to wheat, the grain yield increased (Table 4) and importantly the nitrogen content remained almost unchanged or increased too (Table 5).

Grain nitrogen content is strongly affected by soil nitrogen availability and the ability of plants to absorb and utilize the nitrogen. Soil nitrogen availability was apparently the same for plants grown in a presence of pyroglutamic acid or in a presence of pyroglutamic acid and MTU (MTU is applied in 0.4 g/ha). Thus, it is apparent that MTU enhanced nitrogen absorption and utilization when co-applied with pyroglutamic acid.

**Table 5. Analysis of the elemental composition of grains from winter wheat. Plants were treated in May 2019 by foliar spraying with MTU or pyroglutamic acid or both together at the indicated growth stages (BBCH scale). The spray volume was 200 l/ha.**

| Treatment | Growth stage (BBCH scale) | Nitrogen content (%) | % of control |
|---|---|---|---|
| Control | - | **2.01** | **100 %** |
| MTU (0.4 g/ha) | 32 | 1.82 | - 9.5 % |
| pyroglutamic acid (40 g/ha) | 32 | 1.87 | -7.0% |
| MTU + pyroglutamic acid 0.4 g + 40 g/ha | 32 | **2.02** | **+ 0.5 %** |
| | | | |
| MTU (0.4 g/ha) | 39 | 1.97 | -2.0% |
| pyroglutamic acid (40 g/ha) | 39 | 1.90 | - 5.5 % |
| MTU + pyroglutamic acid 0.4 g + 40 g/ha | 39 | **2.15** | **+ 7.0 %** |
| | | | |
| MTU (0.4 g/ha) | 50-55 | 1.81 | - 10.0 % |
| pyroglutamic acid (40 g/ha) | 50-55 | 1.81 | - 10.0 % |
| MTU + pyroglutamic acid 0.4 g + 40 g/ha | 50-55 | **2.00** | **-0.5 %** |

### Example 5

### The combination of MTU and pyroglutamic acid show the synergistic effect on grain yield of oilseed rape in field conditions

Oilseed rape variety Elgar (2018) and Elizze (2019) were grown in the UK in the years 2018 and 2019. Experiments were performed in accordance with the Good Experimental Practice criteria. MTU was applied by spraying at a concentration of 10 µM (2 mg/L) and a dosage of 200 L/ha (0.4 g/ha of MTU). Pyroglutamic acid was used at 40 g/ha, applied at a dosage of 200 L/ha in a water solution. Treatment timings are shown in Table 6.

From the results obtained (Table 6) it is clear that the combined application of MTU with pyroglutamic acid has a synergistic effect on the grain yield of oilseed rape. This applies to applications in all growth stages tested. The synergistic effect on the grain yield of oilseed rape was shown in both years - 2018 and 2019.

**Table 6. Grain yield of field-grown oilseed rape treated by MTU, pyroglutamic acid, or by a combination of MTU with pyroglutamic acid. Asterisks indicate statistically significant differences from the control treatment, determined by the two-tailed Student's t-test at P-values of 0.1 > P.**

| **Treatment** | **Growth stage (BBCH scale)** | **Yield (t/ha)** | **% of control** |
|---|---|---|---|
| **OILSEED RAPE, UK 2018** | | | |
| control | - | 3.79 | 100 % |
| MTU | 13 | 3.90 | +2.9% |
| pyroglutamic acid | 13 | 3.97* | + 5.0 % |
| MTU + pyroglutamic acid | 13 | **4.23*** | **+ 11.7 %** |
| | | | |
| control | - | 4.40 | 100 % |
| MTU | 65 | 4.61 | +4.8 % |
| pyroglutamic acid | 65 | 5.45* | + 23.9 % |
| MTU + pyroglutamic acid | 65 | **5.89*** | **+ 33.9 %** |

| **OILSEED RAPE, UK 2019** | | | |
|---|---|---|---|
| control | - | 3.70 | 100 % |
| MTU | 65 | 3.93 | + 6.2 % |
| pyroglutamic acid | 65 | 3.83 | + 3.5 % |
| MTU + pyroglutamic acid | 65 | **4.17*** | **+ 12.7 %** |
| | | | |
| MTU | 70 | 3.84 | + 3.8 % |
| pyroglutamic acid | 70 | 3.90 | + 5.4 % |
| MTU + pyroglutamic acid | 70 | **4.13*** | **+ 11.6 %** |

### Example 6

### The combination of MTU and pyroglutamic acid show the synergistic effect on seed yield of sunflower in field conditions

Seeds of sunflower (*Helianthus sp.* L.) were sown in Hungary in 2020 in accordance with the Good Experimental Practice criteria. MTU was applied by spraying at a concentration of 10 µM (2 mg/L) and a dosage of 300 L/ha. Pyroglutamic acid was used at 50 g/ha, applied at a dosage of 300 L/ha in a water solution. Treatment timings are shown in Table 7.

From the results obtained (Table 7) it is clear that the combined application of MTU with pyroglutamic acid has a synergistic effect on the seed yield of sunflowers. This applies to applications in both growth stages tested.

**Table 7. Grain yield of field-grown sunflower treated by MTU, pyroglutamic acid, or by a combination of MTU with pyroglutamic acid. Asterisks indicate statistically significant differences from the control treatment, determined by the two-tailed Student's t-test at P-values of 0. 1 >P.**

| **Treatment** | **Growth stage (BBCH scale)** | **Yield (t/ha)** | **% of control** |
|---|---|---|---|
| control | - | 2.75 | 100 % |
| MTU | 16-18 | 3.08 | + 12.0 % |
| pyroglutamic acid | 16-18 | 2.89 | + 5.0 % |
| MTU + pyroglutamic acid | 16-18 | **3.33*** | **+ 21.0 %** |
| | | | |
| MTU | 55 | 2.88 | + 4.7 % |
| pyroglutamic acid | 55 | 2.92 | + 6.3 % |
| MTU + pyroglutamic acid | 55 | **3.20*** | **+ 16.1 %** |

## Claims

1. A combination for improving plant growth and/or yield comprising 1-(2-methoxyethyl)-3-(1,2,3-thiadiazol-5yl)urea and at least one nitrogen utilization enhancer, selected from the group consisting of pyroglutamic acid, phosphite, glutamine, glycine, 2-oxoglutarate, glutamic acid, aspartic acid, proline, γ-aminobutyric acid, poly-γ-(glutamic acid), diethyl aminoethyl hexanoate, N-acetyl thiazolidine 4-carboxylic acid, preferably the nitrogen utilization enhancer is pyroglutamic acid and/or phosphite.

2. The combination according to claim 1, **characterized in that** the weight ratio of 1-(2-methoxyethyl)-3-(1,2,3-thiadiazol-5yl)urea to the nitrogen utilization enhancer is from 1:5000 to 1:10.

3. The combination according to claim 1 or 2, **characterized in that** the combination is in the form of an aqueous composition and the concentration of 1-(2-methoxyethyl)-3-(1,2,3-thiadiazol-5yl)urea in the composition is from 25 nM to 100 µM.

4. The combination according to claim 3, **characterized in that** the concentration of 1-(2-methoxyethyl)-3-(1,2,3-thiadiazol-5yl)urea in the composition is from 2.5 µM to 25 µM.

5. The combination according to claim 4, **characterized in that** the content of the nitrogen utilization enhancer in 1 liter of the composition is from 10 to 5000 mg.

6. The combination according to any one of the preceding claims 1 to 5, **characterized in that** the nitrogen utilization enhancer is pyroglutamic acid and the weight ratio of 1-(2-methoxyethyl)-3-(1,2,3-thiadiazol-5yl)urea to pyroglutamic acid is in the range of from 1:25 to 1:2000.

7. The combination according to any one of the preceding claims 1 to 5, **characterized in that** the nitrogen utilization enhancer is phosphite and the weight ratio of 1-(2-methoxyethyl)-3-(1,2,3-thiadiazol-5yl)urea to phosphite is in the range of from 1:40 to 1:4000.

8. A growth-enhancing and/or antistress formulation for plants, **characterized in that** it comprises the combination according to any one of the preceding claims 1 to 7, and at least one additive, selected from fertilizers, herbicides and/or micronutrients;
or
it comprises the combination according to any one of the preceding claims 1 to 7, and at least one agronomically acceptable excipient, selected from the group comprising solid and liquid carriers, surfactants, wetting agents, preservatives, stabilizers, emulgators, antifoams, viscosity regulators, binders, tackifiers, and solubilizing agents;
or
it comprises the combination according to any one of the preceding claims 1 to 7, and at least one additive, and at least one agronomically acceptable excipient.

9. The growth-enhancing and/or antistress formulation according to claim 8, **characterized in that** it comprises the combination according to any one of the preceding claims 1 to 7, and either at least one additive or at least one agronomically acceptable excipient; wherein the formulation contains from 0.1 to 95 % by weight of the combination according to any one of the preceding claims 1 to 6, and from 5 to 99.9 % by weight of the additive or of the agronomically acceptable excipient.

10. The growth-enhancing and/or antistress formulation according to claim 8, **characterized in that** it comprises the combination according to any one of the preceding claims 1 to 7, at least one additive and at least one agronomically acceptable excipient; wherein the formulation contains from 0.1 to 95 % by weight of the combination according to any one of the preceding claims 1 to 6, from 1 to 99.5 % by weight of the agronomically acceptable excipients, and from 0.4 to 4 % by weight of the additive.

11. A method of increasing plant growth, stress resistance, and yields, **characterized in that** it comprises the step of applying the combination of 1-(2-methoxyethyl)-3-(1,2,3-thiadiazol-5yl)urea and the at least one nitrogen utilization enhancer according to any one of the preceding claims 1 to 7 or of the formulation according to claims 8 to 10, to the plant, the seed and/or to the soil, wherein said plant is preferably selected from the group comprising crops, beet, pomes, drupes and soft fruit, leguminous plants, soybeans, oil plants, cucumber plants, fiber plants, citrus fruits, vegetables, tobacco, nuts, eggplants, sugar cane, tea, vine grapes, hops, bananas, natural rubber, medicinal plants, ornamentals;
more preferably 1-(2-methoxyethyl)-3-(1,2,3-thiadiazol-5yl)urea and the at least one nitrogen utilization enhancer are applied sequentially or simultaneously.

12. The method according to claim 11, **characterized in that** the step of applying the combination of 1-(2-methoxyethyl)-3-(1,2,3-thiadiazol-5yl)urea and the at least one nitrogen utilization enhancer according to any one of the preceding claims 1 to 7 or of the formulation according to claims 8 to 10 comprises applying 1-(2-methoxyethyl)-3-(1,2,3-thiadiazol-5yl)urea at a rate of from 100 mg/ha to 2.5 g/ha and of the at least one nitrogen utilization enhancer at a rate of from 25 g/ha to 500 g/ha.

13. Use of 1-(2-methoxyethyl)-3-(1,2,3-thiadiazol-5yl)urea and of the at least one nitrogen utilization enhancer according to claim 1; in agriculture for increasing plant growth, stress resistance, and yields.

14. Use according to claim 13, wherein 1-(2-methoxyethyl)-3-(1,2,3-thiadiazol-5yl)urea and the at least one nitrogen utilization enhancer are applied sequentially or simultaneously.

15. Use of the combination according to any one of the preceding claims 1 to 7 or of the formulation according to claims 8 to 10, in agriculture for increasing plant growth, stress resistance, and yields.

## Patentansprüche

1. Eine Kombination zur Verbesserung des Pflanzenwachstums und/oder des Ertrags, umfassend 1-(2-Methoxyethyl)-3-(1,2,3-thiadiazol-5yl)harnstoff und mindestens einen Stickstoff-Verwertungsverbesserer, ausgewählt aus der Gruppe bestehend aus Pyroglutaminsäure, Phosphit, Glutamin, Glycin, 2-Oxoglutarat, Glutaminsäure, Asparaginsäure, Prolin, γ-Aminobuttersäure, Poly-γ-(Glutaminsäure), Diethylaminoethylhexanoat, N-Acetyl-Thiazolidin-4-carbonsäure, wobei vorzugsweise der Stickstoff- Verwertungsverbesserer Pyroglutaminsäure und/oder Phosphit ist.

2. Die Kombination nach Anspruch 1, **dadurch gekennzeichnet, dass** das Gewichtsverhältnis von 1-(2-Methoxyethyl)-3-(1,2,3-thiadiazol-5yl)harnstoff zu dem Stickstoff-Verwertungsverbesserer im Bereich von 1:5000 bis 1:10 liegt.

3. Die Kombination nach Anspruch 1 oder 2, **dadurch gekennzeichnet, dass** die Kombination in Form einer wässrigen Zusammensetzung vorliegt und die Konzentration von 1-(2-Methoxyethyl)-3-(1,2,3-thiadiazol-5yl)harnstoff in der Zusammensetzung von 25 nM bis 100 µM reicht.

4. Die Kombination nach Anspruch 3, **dadurch gekennzeichnet, dass** die Konzentration von 1-(2-Methoxyethyl)-3-(1,2,3-thiadiazol-5yl)harnstoff in der Zusammensetzung von 2,5 µM bis 25 µM reicht.

5. Die Kombination nach Anspruch 4, **dadurch gekennzeichnet, dass** der Gehalt des Stickstoff-Verwertungsverbesserers in 1 Liter der Zusammensetzung von 10 bis 5000 mg beträgt.

6. Die Kombination nach einem der vorstehenden Ansprüche 1 bis 5, **dadurch gekennzeichnet, dass** der Stickstoff-Verwertungsverbesserer Pyroglutaminsäure ist und das Gewichtsverhältnis von 1-(2-Methoxyethyl)-3-(1,2,3-thiadiazol-5yl)harnstoff zu Pyroglutaminsäure im Bereich von 1:25 bis 1:2000 liegt.

7. Die Kombination nach einem der vorstehenden Ansprüche 1 bis 5, **dadurch gekennzeichnet, dass** der Stickstoff-Verwertungsverbesserer Phosphit ist und das Gewichtsverhältnis von 1-(2-Methoxyethyl)-3-(1,2,3-thiadiazol-5yl)harnstoff zu Phosphit im Bereich von 1:40 bis 1:4000 liegt.

8. Eine wachstumsfördernde und/oder antistresswirksame Formulierung für Pflanzen, **dadurch gekennzeichnet, dass** sie die Kombination nach einem der vorstehenden Ansprüche 1 bis 7 und mindestens einen Zusatzstoff ausgewählt aus Düngemitteln, Herbiziden und/oder Mikronährstoffen umfasst;
oder die Formulierung umfasst die Kombination nach einem der vorstehenden Ansprüche 1 bis 7 und mindestens einen agronomisch akzeptablen Hilfsstoff, ausgewählt aus der Gruppe bestehend aus festen und flüssigen Trägern, Tensiden, Netzmitteln, Konservierungsmitteln, Stabilisatoren, Emulgatoren, Entschäumern, Viskositätsreglern, Bindemitteln, Haftmitteln und Lösungsvermittlern;
oder die Formulierung umfasst die Kombination nach einem der vorstehenden Ansprüche 1 bis 7 und mindestens einen Zusatzstoff und mindestens einen agronomisch akzeptablen Hilfsstoff.

9. Die wachstumsfördernde und/oder antistresswirksame Formulierung nach Anspruch 8, **dadurch gekennzeichnet, dass** sie die Kombination nach einem der vorstehenden Ansprüche 1 bis 7 und entweder mindestens einen Zusatzstoff oder mindestens einen agronomisch akzeptablen Hilfsstoff umfasst; wobei die Formulierung 0,1 bis 95 Gew.-% der Kombination nach einem der vorstehenden Ansprüche 1 bis 6, und 5 bis 99,9 Gew.-% des Zusatzstoffs oder des agronomisch akzeptablen Hilfsstoffs enthält.

10. Die wachstumsfördernde und/oder antistresswirksame Formulierung nach Anspruch 8, **dadurch gekennzeichnet, dass** sie die Kombination nach einem der vorstehenden Ansprüche 1 bis 7, mindestens einen Zusatzstoff und mindestens einen agronomisch akzeptablen Hilfsstoff umfasst; wobei die Formulierung 0,1 bis 95 Gew.-% der Kombination nach einem der vorstehenden Ansprüche 1 bis 6, 1 bis 99,5 Gew.-% der agronomisch akzeptablen Hilfsstoffe und 0,4 bis 4 Gew.-% des Zusatzstoffs enthält.

11. Ein Verfahren zur Erhöhung des Pflanzenwachstums, der Stressresistenz und des Ertrags, **dadurch gekennzeichnet, dass** es den Schritt umfasst, die Kombination aus 1-(2-Methoxyethyl)-3-(1,2,3-thiadiazol-5yl)harnstoff und dem mindestens einen Stickstoff-Verwertungsverbesserer nach einem der Ansprüche 1 bis 7 oder die Formulierung nach den Ansprüchen 8 bis 10 auf die Pflanze, das Saatgut und/oder auf den Boden auszubringen, wobei die genannte Pflanze vorzugsweise aus der Gruppe ausgewählt ist, die Feldfrüchte, Rüben, Kern-, Stein- und Beerenobst, Leguminosen, Sojabohnen, Ölpflanzen, Gurkenpflanzen, Faserpflanzen, Zitrusfrüchte, Gemüse, Tabak, Nüsse, Auberginen, Zuckerrohr, Tee, Weintrauben, Hopfen, Bananen, Naturkautschuk, Arzneipflanzen, Zierpflanzen umfasst; und wobei vorzugsweise 1-(2-Methoxyethyl)-3-(1,2,3-thiadiazol-5yl)harnstoff und der mindestens eine Stickstoff-Verwertungsverbesserer sequenziell oder gleichzeitig ausgebracht werden.

12. Das Verfahren nach Anspruch 11, **dadurch gekennzeichnet, dass** der Schritt des Ausbringens der Kombination von 1-(2-Methoxyethyl)-3-(1,2,3-thiadiazol-5yl)harnstoff und dem mindestens einen Stickstoff- Verwertungsverbesserer nach einem der Ansprüche 1 bis 7 oder der Formulierung nach den Ansprüchen 8 bis 10 umfasst das Ausbringen von 1-(2-Methoxyethyl)-3-(1,2,3-thiadiazol-5yl)harnstoff in einer Aufwandmenge von 100 mg/ha bis 2,5 g/ha und von mindestens einem Stickstoff-Verwertungsverbesserer in einer Aufwandmenge von 25 g/ha bis 500 g/ha.

13. Verwendung von 1-(2-Methoxyethyl)-3-(1,2,3-thiadiazol-5yl)harnstoff und des mindestens einen Stickstoff-Verwertungsverbesserers nach Anspruch 1 in der Landwirtschaft zur Erhöhung des Pflanzenwachstums, der Stressresistenz und des Ertrags.

14. Verwendung nach Anspruch 13, wobei 1-(2-Methoxyethyl)-3-(1,2,3-thiadiazol-5yl)harnstoff und der mindestens eine Stickstoff-Verwertungsverbesserer sequenziell oder gleichzeitig ausgebracht werden.

15. Verwendung der Kombination nach einem der Ansprüche 1 bis 7 oder der Formulierung nach den Ansprüchen 8 bis 10 in der Landwirtschaft zur Erhöhung des Pflanzenwachstums, der Stressresistenz und des Ertrags.

## Revendications

1. Une combinaison pour améliorer la croissance et/ou le rendement des plantes comprenant la 1-(2-méthoxyéthyl)-3-(1,2,3-thiadiazol-5yl)urée et au moins un améliorateur d'utilisation de l'azote, choisi dans le groupe constitué par l'acide pyroglutamique, le phosphite, la glutamine, la glycine, le 2-oxoglutarate, l'acide glutamique, l'acide aspartique, la proline, l'acide γ-aminobutyrique, le poly-γ-(acide glutamique), l'hexanoate de diéthylaminoéthyle, l'acide N-acétylthiazolidine-4-carboxylique, de préférence l'améliorateur d'utilisation de l'azote étant l'acide pyroglutamique et/ou le phosphite.

2. La combinaison selon la revendication 1, **caractérisée en ce que** le rapport pondéral de la 1-(2-méthoxyéthyl)-3-(1,2,3-thiadiazol-5yl)urée à l'améliorateur d'utilisation de l'azote est compris entre 1:5000 et 1:10.

3. La combinaison selon la revendication 1 ou 2, **caractérisée en ce que** la combinaison est sous forme d'une composition aqueuse et que la concentration de la 1-(2-méthoxyéthyl)-3-(1,2,3-thiadiazol-5yl)urée dans ladite composition est comprise entre 25 nM et 100 µM.

4. La combinaison selon la revendication 3, **caractérisée en ce que** la concentration de la 1-(2-méthoxyéthyl)-3-(1,2,3-thiadiazol-5yl)urée dans ladite composition est comprise entre 2,5 µM et 25 µM.

5. La combinaison selon la revendication 4, **caractérisée en ce que** la teneur en améliorateur d'utilisation de l'azote dans 1 litre de la composition est comprise entre 10 et 5000 mg.

6. La combinaison selon l'une quelconque des revendications précédentes 1 à 5, **caractérisée en ce que** l'améliorateur d'utilisation de l'azote est l'acide pyroglutamique et que le rapport pondéral de la 1-(2-méthoxyéthyl)-3-(1,2,3-thiadiazol-5yl)urée à l'acide pyroglutamique est dans la plage comprise entre 1:25 et 1:2000.

7. La combinaison selon l'une quelconque des revendications précédentes 1 à 5, **caractérisée en ce que** l'améliorateur d'utilisation de l'azote est le phosphite et que le rapport pondéral de la 1-(2-méthoxyéthyl)-3-(1,2,3-thiadiazol-5yl)urée au phosphite est dans la plage comprise entre 1:40 et 1:4000.

8. Une formulation stimulante de croissance et/ou antistress pour plantes, **caractérisée en ce qu'elle** comprend la combinaison selon l'une quelconque des revendications précédentes 1 à 7, et au moins un additif choisi parmi les engrais, les herbicides et/ou les micronutriments ;
ou
elle comprend la combinaison selon l'une quelconque des revendications précédentes 1 à 7, et au moins un excipient agronomiquement acceptable choisi dans le groupe comprenant des supports solides et liquides, des agents tensioactifs, des agents mouillants, des agents de conservation, des stabilisants, des émulseurs, des agents antimois, des régulateurs de viscosité, des liants, des adhésifs et des agents de solubilisation ;
ou
elle comprend la combinaison selon l'une quelconque des revendications précédentes 1 à 7, et au moins un additif, et au moins un excipient agronomiquement acceptable.

9. La formulation stimulante de croissance et/ou antistress selon la revendication 8, **caractérisée en ce qu'elle** comprend la combinaison selon l'une quelconque des revendications précédentes 1 à 7, et soit au moins un additif, soit au moins un excipient agronomiquement acceptable ; la formulation contenant de 0,1 à 95 % en poids de la combinaison selon l'une quelconque des revendications précédentes 1 à 6, et de 5 à 99,9 % en poids de l'additif ou de l'excipient agronomiquement acceptable.

10. La formulation stimulante de croissance et/ou antistress selon la revendication 8, **caractérisée en ce qu'elle** comprend la combinaison selon l'une quelconque des revendications précédentes 1 à 7, au moins un additif et au moins un excipient agronomiquement acceptable ; la formulation contenant de 0,1 à 95 % en poids de la combinaison selon l'une quelconque des revendications précédentes 1 à 6, de 1 à 99,5 % en poids des excipients agronomiquement acceptables, et de 0,4 à 4 % en poids de l'additif.

11. Un procédé d'augmentation de la croissance des plantes, de leur résistance au stress et de leur rendement, **caractérisé en ce qu'il** comprend l'étape d'application de la combinaison de la 1-(2-méthoxyéthyl)-3-(1,2,3-thiadiazol-5yl)urée et dudit au moins un améliorateur d'utilisation de l'azote selon l'une quelconque des revendications précédentes 1 à 7 ou de la formulation selon les revendications 8 à 10, à la plante, à la semence et/ou au sol,
ladite plante étant de préférence choisie dans le groupe comprenant les grandes cultures, la betterave, les fruits à pépins, les fruits à noyau et les fruits rouges, les légumineuses, le soja, les plantes oléagineuses, les plantes de concombre, les plantes à fibres, les agrumes, les légumes, le tabac, les fruits à coque, l'aubergine, la canne à sucre, le thé, la vigne, le houblon, la banane, le caoutchouc naturel, les plantes médicinales, les plantes ornementales ; de manière encore plus préférée, la 1-(2-méthoxyéthyl)-3-(1,2,3-thiadiazol-5yl)urée et ledit au moins un améliorateur d'utilisation de l'azote sont appliqués de façon séquentielle ou simultanée.

12. Le procédé selon la revendication 11, **caractérisé en ce que** l'étape d'application de la combinaison de la 1-(2-méthoxyéthyl)-3-(1,2,3-thiadiazol-5yl)urée et dudit au moins un améliorateur d'utilisation de l'azote selon l'une quelconque des revendications précédentes 1 à 7 ou de la formulation selon les revendications 8 à 10 comprend l'application de la 1-(2-méthoxyéthyl)-3-(1,2,3-thiadiazol-5yl)urée à une dose comprise entre 100 mg/ha et 2,5 g/ha et dudit au moins un améliorateur d'utilisation de l'azote à une dose comprise entre 25 g/ha et 500 g/ha.

13. Une utilisation de la 1-(2-méthoxyéthyl)-3-(1,2,3-thiadiazol-5yl)urée et dudit au moins un améliorateur d'utilisation de l'azote selon la revendication 1 en agriculture pour augmenter la croissance des plantes, leur résistance au stress et leur rendement.

14. L'utilisation selon la revendication 13, dans laquelle la 1-(2-méthoxyéthyl)-3-(1,2,3-thiadiazol-5yl)urée et ledit au moins un améliorateur d'utilisation de l'azote sont appliqués de façon séquentielle ou simultanée.

15. L'utilisation de la combinaison selon l'une quelconque des revendications précédentes 1 à 7 ou de la formulation selon les revendications 8 à 10, en agriculture pour augmenter la croissance des plantes, leur résistance au stress et leur rendement.
